# EUROPEAN PATENT SPECIFICATION

(11) **EP 1 369 021 B1**
(45) Date of publication and mention of the grant of the patent: **08.08.2007**
(21) Application number: 03076215.7
(22) Date of filing: 28.04.2003
(51) Int. Cl.: A01D 43/00

(54) **A device for crop processing**
Vorrichtung zur Behandlung von Erntegut
Dispositif pour le traitement de récolte

(30) Priority: 06.06.2002 NL 1020790
(43) Date of publication of application: 10.12.2003
(73) Proprietor: Lely Enterprises AG, 6300 ZUG (CH)
(72) Inventor: Van den Berg, Karel, 2971 BR Bleskensgraaf (NL); Miedema, Theo Jan, 2676 VB Maasdijk (NL); Van der Lely, Alexander, 3065 NA Rotterdam (NL); Havermans, Cornelis Christianus Franciscus, 4765 DG Zevenbergschenhoek (NL)
(74) Representative: Corten, Maurice Jean F.M.

(56) References cited:
- EP-A- 0 543 312
- EP-A- 0 812 532
- DE-U- 9 405 847
- FR-A- 2 375 814
- US-A- 2001 022 506

## Description

The invention relates to a device for crop processing according to the preamble of claim 1.

Such devices are known per se, for example from EP-A-0 543 312. A disadvantage of the known devices is that, for providing sufficient capacity, they need to have a relatively large working width with all the disadvantages attached thereto, for example in relation to road transport, energy consumption and cost price.

The invention aims at providing a device for crop processing not having or at least having to a lesser extent the above-mentioned disadvantages.

For this purpose the invention provides a device for crop processing, which device is autonomously movable, as set out in the characterizing portion of claim 1. By using an autonomously movable device, i.e. a device that does not require a driver for being moved, the device can be active substantially 24 hours a day. The desired capacity can then be taken from the working duration instead of the working width. Therefore, the device according to the invention can be designed as a relatively small device.

The tedder unit is preferably designed in such a way that it enables the performance of several functions. The tedder unit is in particular provided with a crushing device for crushing the crop. Additionally or alternatively, the tedder unit is provided with a picking-up device for picking up the crop.

Depending on the wishes of the user it is advantageous if the autonomous device according to the invention can perform each processing operation separately or can perform several processing operations simultaneously. In an embodiment of device according to the invention this is possible if the device is provided with a switching device for switching on or switching off at least one of the units from the group consisting of the mowing unit, the rake unit and the tedder unit. It is then advantageous if the switching device is additionally or alternatively suitable for switching on or switching off at least one of the devices from the group consisting of crushing equipment and picking-up equipment.

Although it is possible to use the various known mowing units in the autonomous device according to the invention, it has unexpected advantages to use a cage-mower as mowing unit. By means of such a cage-mower known per se it is possible for example to convey the mown crop in a simple manner to a receptacle or a drag bag.

In an embodiment of a device according to the invention, the tedder unit is a drum-tedder with a comb. Due to this, the drum-tedder can pick up the crop which is then guided through the comb, so that a frictional crushing effect is created. By disposing the comb hingeably in the drum-tedder, the comb can be switched off so that a normal drum-tedder is created.

In the device according to the invention, the device is provided with a position-determining system for determining the position of the device, with a boundary-detecting system for detecting a boundary of mown crop, and with a control device for controlling the device with the aid of data from the position-determining system and/or the boundary-detecting system. When the crop needs to be tedded for example, it is difficult to determine only on the basis of the position of the device where tedding has already taken place. By letting uncovered for example, along the edge of the working width, a boundary that can be detected by the boundary-detecting system, the surface to be processed can be processed accurately.

In order to prevent animals or human beings from being injured by the units or equipment of the device, the device is provided with protecting means for protecting the device.

An embodiment of a device according to the invention will be explained hereinafter in further detail with reference to the drawing in which:
Figure 1 shows schematically a perspective view of a device for processing crop according to the invention;
Figure 2 shows schematically in plan view the crop-processing parts of a device for processing crop according to the invention, and
Figure 3 shows schematically in side view the crop-processing parts of a device for processing crop according to the invention.

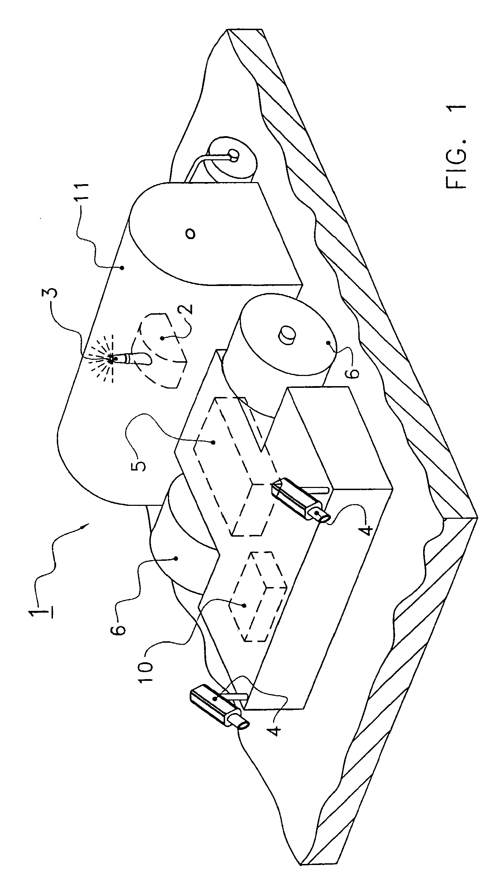

Figure 1 shows schematically a perspective view of a device 1 for processing crop according to the invention. The device 1 can be moved autonomously by determining, with the aid of a position-determining system 2, provided with an aerial 3 if desired, the position of the device 1 in the field to be processed. Such position-determining systems are known per se, for example GPS, DGPS, Galileo, or position determination by means of beacons and the like. The device 1 further comprises a boundary-detecting system 4, for example one or more cameras or another boundary-detecting system known per se, for detecting a boundary of already mown crop, for example already mown crop that has been tedded or deposited in a swath. In the case that the crop-processing does not automatically produce a boundary, the device can be controlled in such a way that a to be detected boundary is produced. With the aid of data from the position-determining system 2, 3 and/or the boundary-detecting system 4, a control device 5 for controlling the device 1, in particular the driving motor and the wheels 6 thereof, is controlled so that the device 1 follows a track in the field to be processed.

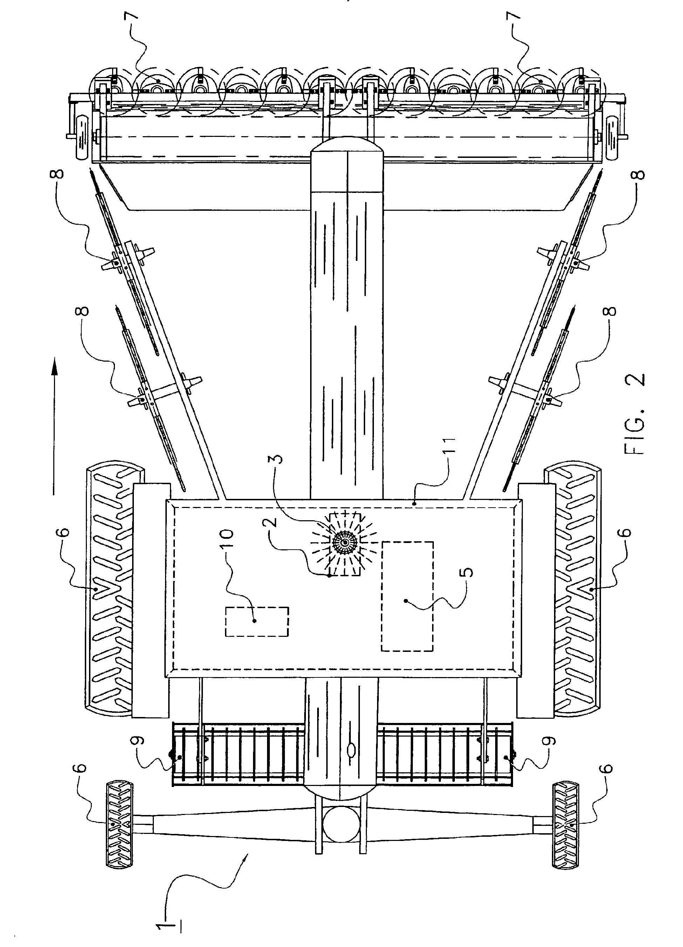

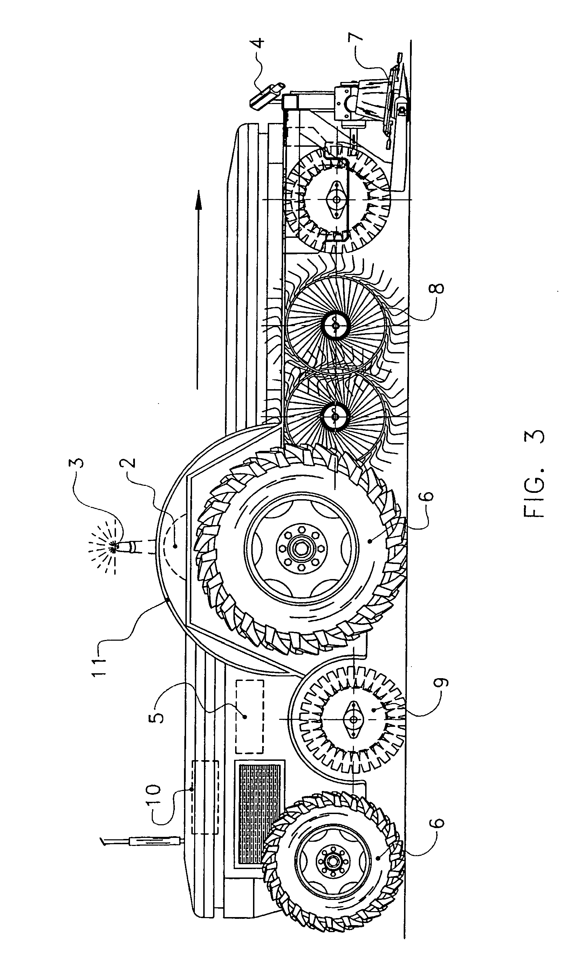

The device is provided with a mowing unit 7 for mowing the crop (Figures 2 and 3). Such a mowing unit 7 may be constituted by the currently often used disc-mowers or (double)-knife mowers. Although a drum-mower may be applied as well, the latter is not preferred because of its heavier weight relative to other mowing units. However, a cage-mower known per se is extremely suitable. Said cage-mower does not only enable the conveyance of the mown crop in a simple manner to a receptacle or a drag bag, but is preferable to the other known mowing units because of its safety.

The device 1 further comprises a rake unit 8 for raking mown crop. Such a rake unit is also known per se and may be constituted for example by swath boards and/or rotating rakes.

There is disposed a tedder unit 9 for tedding mown crop. Although also here it is possible to use tedder units known per se, it is advantageous to use a drum-tedder with a comb. The drum-tedder picks up the crop and guides it through the comb, so that a frictional crushing effect is created. By switching off or pivoting away the comb, there is created a normal drum-tedder that can be used for tedding the crop. Of course, besides a comb, other crushing devices for crushing the crop may be used as well.

The tedder unit 9 may be provided, if desired, with a (non-shown) picking-up device for picking up the crop.

Depending on the wishes of the user, it is possible for the device 1 to perform every processing operation separately or several processing operations simultaneously. For this purpose the device 1 is provided with a switching device 10, for example a computer, for switching on or switching off at least one of the units from the group consisting of the mowing unit, the rake unit and the tedder unit. Here it is advantageous if the switching device is additionally or alternatively suitable for switching on or switching off at least one of the devices from the group consisting of crushing equipment and picking-up equipment. For this purpose the switching device 10 is connected in a proper manner to the relevant units or devices, and is preferably capable of being programmed beforehand and/or remotely.

In order to ensure a safe stay for human beings and animals present in the vicinity of the autonomous device 1, said device 1 is provided with a number of protecting means. The device 1 is provided with a cap 11 covering the crop-processing components, so that in particular the rotating parts are protected. There are further provided detectors, for example constituted by the camera 4, for detecting living beings present in the vicinity of the device 1. Said sensors are known per se, and as examples thereof are mentioned picture recognition systems, colour meters, infrared meters, ultrasonic detectors, lasers, mechanical feelers, and conductivity meters. For the sake of security, in particular the rear side is monitored by a plurality of sensors and protected by a plurality of mechanical protecting means, such as protective caps, flaps and the like.

Consequently, according to the invention the device 1 can be designed so as to have small dimensions. In particular a length of 400 cm, a width of 200 cm, and a maximum weight of 3000 kg are possible, which makes the device easily transportable. Further a motor with a small capacity of for example 40 kW can be used, so that only a small quantity of fuel needs to be on board for a working duration of for example 12 or 24 hours.

## Claims

1. A device (1) for crop processing, which device (1) is provided with a mowing unit (7) for mowing the crop, with a rake unit (8) for raking mown crop, and with a tedder unit (9) for tedding mown crop, **characterized in that** said device (1) is autonomously movable, i.e. a device that does not require a driver for being moved, and **in that** said device (1) is provided with a position-determining system (2; 3) for determining the position of the device, with a boundary-detecting system (4) for detecting a boundary of mown crop, and with a control device (5) for controlling the device with the aid of data from the position-determining system (2; 3) and/or the boundary-detecting system (4).

2. A device as claimed in claim 1, **characterized in that** the tedder unit (9) is provided with a crushing device for crushing the crop.

3. A device as claimed in claim 1 or 2, **characterized in that** the tedder unit (9) is provided with a picking-up device for picking up the crop.

4. A device as claimed in any one of the preceding claims, **characterized in that** the device (1) is provided with a switching device (10) for switching on or switching off at least one of the units from the group consisting of the mowing unit (7), the rake unit (8) and the tedder unit (9).

5. A device as claimed in claim 4 with reference to claim 2 or 3, **characterized in that** the switching device is suitable for switching on or switching off at least one of the devices from the group consisting of crushing equipment and picking-up equipment.

6. A device as claimed in any one of the preceding claims, **characterized in that** the mowing unit (7) is a cage-mower.

7. A device as claimed in any one of the preceding claims, **characterized in that** the tedder unit (9) is a drum-tedder with a comb.

8. A device as claimed in claim 7, **characterized in that** the comb is hingeably disposed in the drum-tedder.

9. A device as claimed in any one of the preceding claims, **characterized in that** the device (1) is provided with protecting means (11) for protecting the device.

## Patentansprüche

1. Vorrichtung (1) zum Aufbereiten von Gut, wobei die Vorrichtung (1) mit einer Mäheinheit (7) zum Mähen des Gutes, mit einer Recheneinheit (8) zum Rechen von gemähtem Gut und mit einer Zetteinheit (9) zum Zetten von gemähtem Gut versehen ist,
**dadurch gekennzeichnet, dass** die Vorrichtung (1) selbständig bewegbar ist, d. h. eine Vorrichtung ist, die keinen Fahrer benötigt, um bewegt zu werden, und dass die Vorrichtung (1) mit einem Positionsermittlungssystem (2; 3) zum Ermitteln der Position der Vorrichtung, mit einem Begrenzungsermittlungssystem (4) zum Ermitteln einer Begrenzung von gemähtem Gut und mit einer Steuervorrichtung (5) zum Steuern der Vorrichtung mit Hilfe von Daten von dem Positionsermittlungssystem (2; 3) und/oder dem Begrenzungsermittlungssystem (4) versehen ist.

2. Vorrichtung nach Anspruch 1,
**dadurch gekennzeichnet, dass** die Zetteinheit (9) mit einer Quetschvorrichtung zum Quetschen des Gutes versehen ist.

3. Vorrichtung nach Anspruch 1 oder 2,
**dadurch gekennzeichnet, dass** die Zetteinheit (9) mit einer Aufnahmevorrichtung zum Aufnehmen des Gutes versehen ist.

4. Vorrichtung nach einem der vorhergehenden Ansprüche, **dadurch gekennzeichnet, dass** die Vorrichtung (1) mit einer Schaltvorrichtung (10) versehen ist, um mindestens eine der Einheiten der aus der Mäheinheit (7), der Recheneinheit (8) und der Zetteinheit (9) bestehenden Gruppe an- oder abzuschalten.

5. Vorrichtung nach Anspruch 4 unter Rückbezug auf Anspruch 2 oder 3,
**dadurch gekennzeichnet, dass** die Schaltvorrichtung geeignet ist, mindestens eine der Vorrichtungen der aus einer Quetschvorrichtung und einer Aufnahmevorrichtung bestehenden Gruppe an- oder abzuschalten.

6. Vorrichtung nach einem der vorhergehenden Ansprüche, **dadurch gekennzeichnet, dass** die Mäheinheit (7) ein Kastenmäher ist.

7. Vorrichtung nach einem der vorhergehenden Ansprüche, **dadurch gekennzeichnet, dass** die Zetteinheit (9) ein Trommelzetter mit einem Kamm ist.

8. Vorrichtung nach Anspruch 7,
**dadurch gekennzeichnet, dass** der Kamm in dem Trommelzetter schwenkbar angeordnet ist.

9. Vorrichtung nach einem der vorhergehenden Ansprüche, **dadurch gekennzeichnet, dass** die Vorrichtung (1) mit einer Schutzvorrichtung (11) zum Schützen der Vorrichtung versehen ist.

## Revendications

1. Dispositif (1) pour le traitement de récolte, lequel dispositif (1) est doté d'une unité (7) de fauchage destinée à faucher la récolte, d'une unité (8) de râtelage destinée à râteler la récolte fauchée, et d'une unité (9) de fanage destinée à faner la récolte fauchée, **caractérisé en ce que** ledit dispositif (1) peut être déplacé de manière autonome, c.-à-d. sans nécessiter de conducteur pour être déplacé, et **en ce que** ledit dispositif (1) est doté d'un système (2 ; 3) de détermination de la position destiné à déterminer la position du dispositif, d'un système (4) de détection de limites destiné à détecter une limite de la récolte fauchée, et d'un dispositif de commande (5) destiné à commander le dispositif à l'aide de données provenant du système de détermination de la position (2; 3) et/ou du système de détection de limites (4).

2. Dispositif selon la revendication 1,
**caractérisé en ce que** l'unité (9) de fanage est dotée d'un dispositif de broyage destiné à broyer la récolte.

3. Dispositif selon la revendication 1 ou 2, **caractérisé en ce que** l'unité (9) de fanage est dotée d'un dispositif de ramassage destiné à ramasser la récolte.

4. Dispositif selon l'une quelconque des revendications précédentes, **caractérisé en ce que** le dispositif (1) est doté d'un dispositif (10) de commutation destiné à connecter ou à déconnecter au moins l'une des unités du groupe consistant en l'unité (7) de fauchage, en l'unité (8) de râtelage et en l'unité (9) de fanage.

5. Dispositif selon la revendication 4 en référence à la revendication 2 ou 3, **caractérisé en ce que** le dispositif de commutation peut être adapté à la connexion ou à la déconnexion d'au moins l'un des dispositifs du groupe consistant en l'équipement de broyage et en l'équipement de ramassage.

6. Dispositif selon l'une quelconque des revendications précédentes, **caractérisé en ce que** l'unité (7) de fauchage est une faucheuse à cage.

7. Dispositif selon l'une quelconque des revendications précédentes, **caractérisé en ce que** l'unité (9) de fanage est une faneuse à tambour avec un peigne.

8. Dispositif selon la revendication 7, **caractérisé en ce que** le peigne est disposé de manière articulée dans la faneuse à tambour.

9. Dispositif selon l'une quelconque des revendications précédentes, **caractérisé en ce que** le dispositif (1) est doté de moyens de protection (11) destinés à protéger le dispositif.
